# EUROPEAN PATENT APPLICATION

(11) **EP 1 094 238 A2**
(43) Date of publication of application: **25.04.2001**
(21) Application number: 00300899.2
(22) Date of filing: 04.02.2000
(51) Int. Cl.: F16F 7/00

(54) **Resilient mounting apparatus and mounting structure of equipment using resilient mounting apparatus**

(30) Priority: 22.10.1999 JP 30124599
(71) Applicant: Kawasaki Jukogyo Kabushiki Kaisha, Kobe-shi, Hyogo 650-8670 (JP)
(72) Inventor: Boysen, Hans, Kunitachi-shi Tokyo 185-0034 (JP)
(74) Representative: Abbie, Andrew Kenneth

(57) **Abstract**

A resilient mounting apparatus M comprising a collar 1, a resilient body 2 and a sleeve 3 which are all integrally formed into one unit, wherein the collar 1 comprises a tubular portion 1a and a flange portion 1b continuously connected to the tubular portion 1a; the resilient body 2 comprises a neck portion 2a concentrically provided in an inner surface of the collar 1 and a pad portion 2b extending to the flange portion 1b, the resilient body 2 being provided at its central portion with an insertion hole 3a for a fixing tool; the sleeve 3 is integrally provided on an inner surface of the resilient body 2 such as to protrude from an upper end of the collar 1; and a lower end of the pad portion 2b of the resilient body 2 protrudes from a lower end of the sleeve 3.

## Description

### BACKGROUND OF THE INVENTION

### 1 Field of The Invention

The present invention relates to a resilient mounting apparatus to be mounted to equipment generating shocks, vibrations, or structure-borne noise, or to be mounted to equipment which is prone to respond shocks, vibrations, or structure-borne noise transmitted from a foundation.

### 2 Description of The Related Art

A resilient mounting apparatus of this type needs to be compact in size so that it can be disposed in a small space, needs to prevent vibrations and noise while appropriately suppressing deformation, and needs to be excellent in fatigue strength.

Examples of prior art are U.S. Patent No.4,858,880, No.5,127,698, No.4,921,203 and No.4,530,491. Among them, a resilient amounting apparatus described in U.S. Patent No. 4,858,880 which is most relevant to the present application will be explained below.

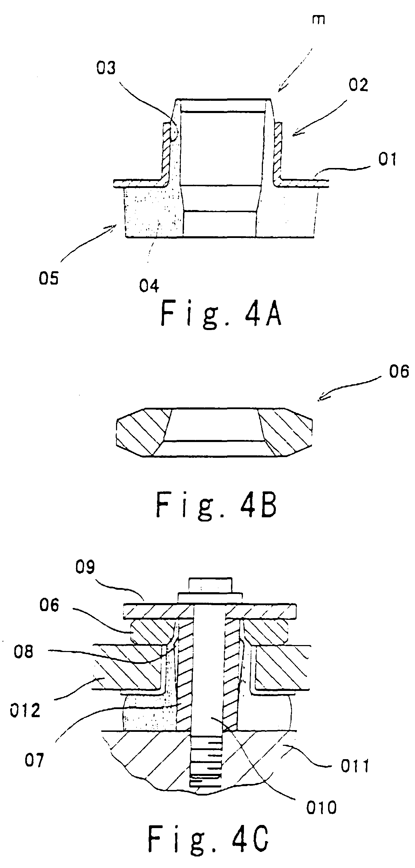

As shown in Fig. 4A, a resilient mounting apparatus m comprises a flanged 01 collar 02, a cylindrical portion 03 integrally connected to the collar 02, and a resilient rubber body 05. Under service conditions shown in Fig. 4C, an annular rebound member 06 formed separately from the resilient mounting apparatus m shown in Fig. 4B and a sleeve 07 shown in Fig. 4C accompany the resilient mounting apparatus m.

That is, under service conditions shown in Fig. 4C, the resilient mounting apparatus in shown in Fig. 4A is loosely fitted around the sleeve 07 with a clearance 08 therebetween, the annular rebound member 06 shown in Fig. 4B surrounding the sleeve 07 is set on the upper portion of the resilient mounting apparatus m, and a washer 09 is set on an upper surface of the rebound member 06. A bolt 010 is inserted through these set elements and threaded into a foundation 011 so that the set elements are fixed. The equipment mounting structure is assembled such that an equipment bracket 012 is placed on an upper surface of the flange 01 of the collar 02 and the rebound member 06 is displaced between the equipment bracket 012 and the washer 09.

The equipment mounting structure using the above-described resilient amounting apparatus has the following inconvenience.
1) The sleeve 07 is not integrally formed with an inner surface of the resilient rubber body 05 of the resilient mounting apparatus m and is independent from the inner surface. Therefore, when it is incorporated into the mounting structure shown in Fig. 4C, there is a possibility that the assembling person may forget to attach the sleeve 07. In such a case, the rebound member 06 and the resilient rubber body 05 are excessively fastened by a bolt 010 and compressed, and the space in the axial direction is not secured.
   Further, since the resilient rubber body 05 is fitted around the sleeve 07 with the clearance 08 interposed therebetween, the rigidity in the radial direction is lost. As a result, antivibration effect is deteriorated.
2) Since it is necessary to dispose the rebound member 06 which is independent from the resilient mounting apparatus m which is thick in the axial direction, this makes it difficult to make the resilient mounting apparatus m compact in size, and it is difficult to employ the resilient amounting apparatus m shown in Fig. 4A, i.e., the equipment mounting structure shown in Fig. 4C in a small space after all.

It is an object of the present invention to provide a resilient mounting apparatus which is compact in width and height.

Another object of the invention is to provide a resilient mounting apparatus which is easy to retrofit into an existing construction.

Another object of the invention is to provide a resilient mounting apparatus suitable for supporting the equipment in an underslung manner.

Another object of the invention is to provide a resilient mounting apparatus with long service life.

### SUMMARY OF THE INVENTION

A resilient mounting apparatus of the present invention comprises a collar, a resilient body and a sleeve which are all integrally formed into one unit, the collar comprises a tubular portion and a flange portion continuously connected to the tubular portion; the resilient body comprises a neck portion concentrically provided in an inner surface of the collar and a pad portion extending to the flange portion, the resilient body being provided at its central portion with an insertion hole for a fixing tool; the sleeve is integrally provided on an inner surface of the resilient body such as to protrude from an upper end of the collar; and a lower end of the pad portion of the resilient body protrudes from a lower end of the sleeve.

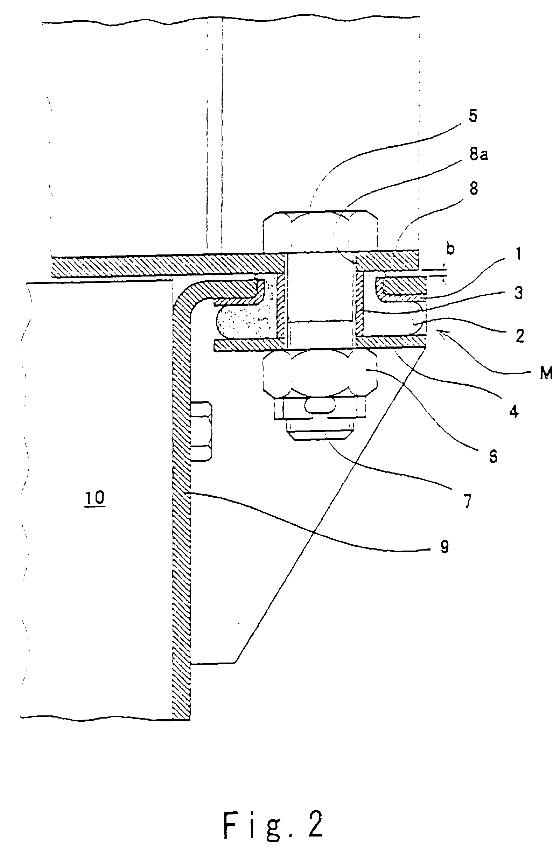

With the above structure:
1) Transmissibility of shock, vibration and structure borne noise in all directions from the equipment to the foundation can be lowered. Transmissibility of shock, vibration and structure borne noise in all directions from the foundation to the equipment can be lowered. In the example of usage in Fig. 2, the resulting noise level decreased by 14dB.
2) The present invention is suitable for underslung equipment, as well as for equipment on top of a foundation.
3) The apparatus can be made compact, and the apparatus can be mounted in space where other resilient mount can not be mounted, or small space.
4) It is easy to retrofit. It can be retrofitted without removing equipment from the foundation, and the existing bolt hole in the foundation or the equipment can be utilized as it is.
5) It is easy to mount. The mounting procedure is easy, a mounting bolt and nut can be tightened and torqued directly against it. It is unnecessary to adjust the clearance and thus, the mounting operation is easy.
6) Since the resilient body portion is not vital to support the equipment, fatigue strength is high and the safety level is high.
7) Although the resilient body is loaded in compression, since it is protected from edge contact and abrasion, the long service life is ensured. Maintenance is unnecessary (no lubrication, no wear).
8) Low cost is achieved.

Further, in the above structure:
1) Where the collar, the resilient body and the sleeve are all integrally vulcanized, the resilient mounting apparatus itself becomes one unit, the mounting operation is easy and labor can be saved.
2) Where the inner and outer surfaces of the protrusion of the pad portion of the resilient body are chamfered, the inner chamfer of the pad portion limits the strain in the resilient body near that end of the sleeve, the outer chamfer limits the maximum tensile strain due to hoop stress generated in the pad portion, thereby aiming to minimize the risk of delamination and to maximize the life of the resilient body.
3) Where the neck portion of the resilient body is enlarged such as to cover an upper end of the tubular potion of the cover, thereby forming a spacer portion, it is possible to appropriately set and reduce the clearance between the foundation and the equipment.
4) A washer may be integrally mounted to a base surface of the pad portion of the resilient body. In this case, the washer is integrally vulcanized to a lower end surface of the resilient body into one unit, or is adhered to the lower end surface using adhesive. With this arrangement, the washer should not be lost at the time of installation or maintenance, and the washer is prevented from being replaced by another washer having improper strength.

Where the above-described resilient mounting apparatus is used, the underslung manner is most preferable for the equipment mounting structure. That is, using any one of the above-described resilient mounting apparatuses, an upper portion of a neck portion is abutted against a lower surface of a foundation and the neck portion is held by a fixing tool in an underslung state, and an equipment mounting bracket is held on an upper surface of a flange of a collar of the resilient mounting apparatus in an underslung state.

### BRIEF DESCRIPTION OF THE DRAWINGS

Figs. 1A and 1B are a perspective view and a sectional view, respectively, of a resilient mounting apparatus according to the present invention;
Fig.2 is a view showing a service state of the resilient mounting apparatus according to the invention;
Fig.3 is a view showing another resilient mounting apparatus;
Fig. 4A is a sectional view, Fig. 4B is a sectional view of rebound member, and Fig. 4C is a view showing a service state of a conventional resilient mounting apparatus.

### DESCRIPTION OF THE PREFERRED EMBODIMENTS

An embodiment of the present invention will be explained with reference to the drawings below.

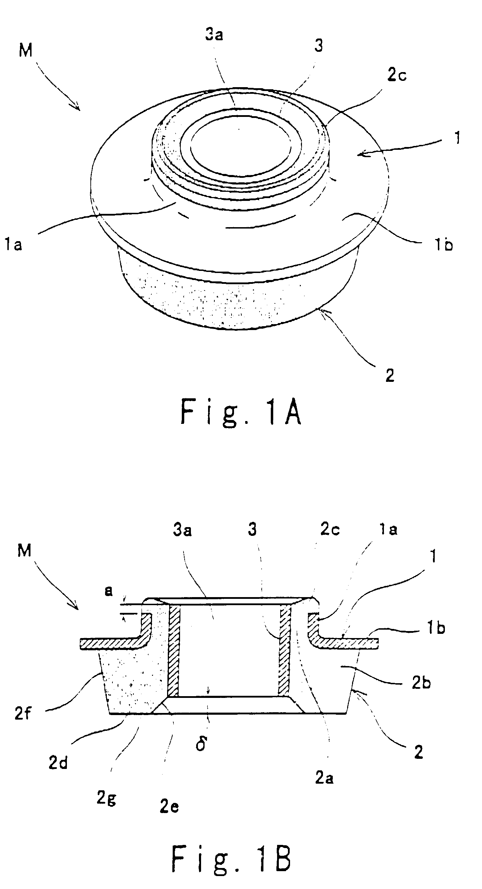

Figs. 1A and 1B are a perspective view and a sectional view of a resilient mounting apparatus, respectively. The resilient mounting apparatus M of the present application comprises three components, i.e., a collar 1, a resilient body 2 and a sleeve 3. It is preferable that these three components are integrally vulcanized to form one unit.

The collar 1 comprises a cylindrical tubular portion 1a and a disk-like flange 1b smoothly and continuously connected to the tubular portion 1a. It is preferable that the collar 1 is made of non-corrosive metal which strong and has abrasion resistance. The collar 1 transmits axial load and radial load acting between the resilient body and an equipment bracket 9 (Fig. 2) mounted to the resilient body 2, and protects the resilient body such that the resilient body should not be cut or abraded by any sharp edge or the like.

The resilient body 2 comprises a tubular neck portion 2a and a flat pat portion 2b smoothly and continuously connected to the neck portion 2a.

The neck portion 2a has an upper portion 2c sandwiched between tubular portion 1a of the collar 1 and the sleeve 3, and the upper portion 2c axially extends beyond the tubular portion 1 such as to cover a leading end of the tubular portion 1a. A head portion of the upper portion 2c is formed in an arc and is projecting beyond an upper portion of the sleeve 3. A diameter of the pad portion 2b is smaller than that of the flange 1b, and a lower end of the pad portion 2b includes a protrusion 2d protruding from a lower end of the sleeve 3 by a distance δ. An end surface of the lower end of the pad portion 2b serves as a base surface 2g which contacts with a washer 4 (Fig. 2) when the apparatus is assembled. Inner and outer sides of the protrusion 2d of the pad portion 2b are chamfered into an inner chamfer 2e and an outer chamfer 2f. The protrusion amount δ of the protrusion 2d is set equal to a displacement amount generated when an axial static load is applied. That is, when no load is applied to the resilient mounting apparatus M, due to this protrusion 2d, the resilient body 2 and the collar 1 are displaced axially toward the end of the neck portion 2a while causing static shear in the neck portion 2a.

The resilient body 2 is made of soft and elastic rubber having selected hardness and damping ratio, The resilient body 2 provides cushioning and damping of shock, vibration and the like from both the axial and radial directions of the resilient mounting apparatus. The dimensions of the neck portion 2a and the pad portion 2b can be decided individually, depending on the desired properties in different directions and on the available space. For example, for the pad portion 2b, its diameter and thickness are decided depending on the desired axial stiffness and the applied static load (equipment weight). The height of the neck portion 2a is decided mainly depending on the equipment bracket 9 and a required clearance b (Fig. 2) between equipment 10 and a foundation 8. The outer diameter of the neck portion 2a is normally minimized so as not to require large mounting holes in the equipment bracket 9.

The sleeve 3 is disposed concentrically with the tubular portion 1a of the collar 1, and an upper end of the sleeve 3 protrudes from the tip end of the tubular portion 1a by a protrusion amount a. Therefore, when the resilient mounting apparatus M is installed, the upper portion 2c of the collar 1 is interposed between the equipment 10 and the foundation 8 so that a constant distance b can be maintained. Further, a base for fastening the mounting bolt 5 and a nut 6 (Fig. 2) can be secured, and generated radial force can be transmitted from the foundation to the resilient body 2. It is preferable that the sleeve 3 is made of high rigid and strong metal having abrasion resistance.

As shown in Fig. 2, when the axial static load (e.g., the suspended equipment weight) is applied, the pad portion 2b is compressed through the collar 1 and the tubular portion returns to near its original, stress free state. This is intended to minimize the static strain of the tubular neck portion 2a and thereby the risk of delamination between the resilient body 2 and the sleeve 3 is minimized. Similarly, the inner chamfer 2c of the pad portion 2b is intended to limit the strain in the resilient body 2 near that end of the sleeve 3 while the outer chamfer intends to limit the maximum tensile strain due to hoop stress generated in the pad portion 2b, thereby aiming to minimize the risk of delamination and to maximize the life of the resilient body 2.

Fig. 2 is an enlarged view of a state in which the resilient mounting apparatus is used. The resilient mounting apparatus is loaded with suspended equipment in an underslung application. The resilient mounting apparatus M is intended to be installed with the static load being applied in the axial direction and loading the pad portion 2b in compression. Thus, the resilient mounting apparatus is normally installed with its symmetric axis oriented vertically. Depending on whether the resilient mounting apparatus M is installed on the foundation (carbody/underframe) or on the equipment bracket itself, it may be oriented with its pad portion 2b pointing either upwards or downwards. This choice may be determined by, e.g., space constraints as-installed or by access constraints during installation or for inspection.

Compared to a normal, rigid equipment installation using the same bolt diameter and having the equipment brackets bolted directly to the foundation, the resilient mounting apparatus needs the following points:

A clearance b in the axial (vertical) direction between the foundation 8 and the equipment bracket 9 is large enough to accommodate occurring vibrations without contact. About 1 mm is often sufficient.

A diameter of the mounting hole M where the resilient mounting apparatus is to be installed, i.e., either on the foundation 8 or on the equipment bracket 9 is large enough for the neck portion 2a of the resilient mounting apparatus to be inserted. In this case, some free space is required on either the foundation 8 or the equipment bracket 9, large enough to accommodate the pad portion 2b of the resilient mounting apparatus together with a washer 4 and a nut 6.

### (a) INSTALLATION PROCEDURE

The equipment is jacked in place and then, the bolt 5, the resilient mounting apparatus M, the bottom washer 4 and the nut 6 are mounted in the mounting hole 8a of the foundation in this order. The nut 6 is tightened until the bottom washer 4 contacts the sleeve 3 so that the equipment is supported by the foundation 8 alone. As a result, the clearance b generated between the foundation 8 and the equipment bracket 9, and the clearance of any connecting cables, air ducts, piping etc. If the clearance b to the foundation is insufficient, small diameter spacing washers may be added to one end or both ends of the sleeve 3 to effectively extend the sleeve 3. If the clearances are satisfactory, nut 6 is tightened to the required torque and a split pin 7 or similar is mounted to each resilient mounting apparatus M.

If the installation is done as a retrofit, the mounting hole on either the foundation 8 or the equipment bracket 9 must first be enlarged. If this is done on the hole of the equipment bracket 9, it can normally be done with the equipment 10 left in place, just lowered a few mm and supported, but it is necessary to take care not to drill into the foundation 8. When a jig is inserted into the hole of the foundation 8 to widen the same, it is necessary to ensure that the enlarged hole is centered.

### (b) STRENGTH

In Fig. 2, the load is supported by the bolt 5, the bottom washer 4 and the nut 6. The bolt 5 is subjected to tension and bending. The highest stresses occurs at the head fillet. The largest stress component is normally the static axial tensile stress caused by the tightening of the nut 6 to required torque, which is the same as for a normal rigid mounting. Added to this are the dynamic tensile stresses caused by shocks and vibrations in the axial direction, which are less than for a rigid mounting by a normal bolt. The radial dynamic tensile stresses by shocks and vibrations are also generated. In the case of rigid mounting by a normal bolt, the radial forces are transferred directly by friction between the bracket 9 and the foundation 8, but in the case of the resilient mounting apparatus, the radial forces are transferred by the sleeve and the bolt in combination. These stresses can be limited by keeping the clearance between the foundation 8 and the equipment bracket 9 small, and by making the bolt 5 diameter sufficiently large.

The bottom washer 4 is subjected to bending due to the axial static and dynamic forces. These stresses are controlled by making the washer sufficiently thick.

The nut 6 is loaded as for a rigid mount by the bolt 5, but with lower axial dynamic forces.

The above components should be dimensioned against yield and fatigue, including collision.

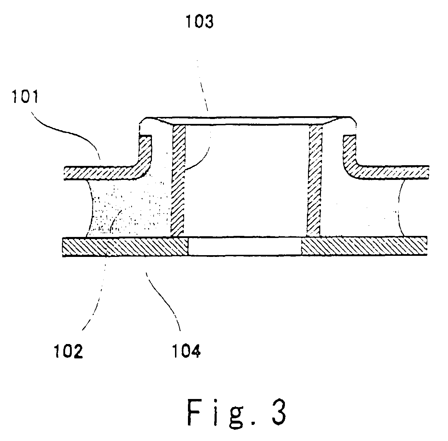

Fig. 3 shows another embodiment of a resilient mounting apparatus. The basic structure is the same as that shown in Fig. 1. That is, a collar 101, a resilient body 102 and a sleeve 103 are integrally vulcanized to form one unit. A washer 104 is integrally vulcanized to a lower end surface of the resilient body 102 into one unit, or is adhered to the lower end surface using adhesive. With this arrangement, the washer should cot be lost at the time of installation or maintenance, and the washer is prevented from being replaced by another washer having improper strength. As shown in Fig. 2, when the resilient mounting apparatus is used for holding the equipment as a retrofit, since the bolt and the washer play important rolls for supporting the static [an] and dynamic loads, it is important that the resilient body 102 and the washer 104 are integrally formed.

Although it is most preferable to support the resilient mounting apparatus by hanging it down, the resilient mounting apparatus can also be applied to a system in which the equipment is supported on the foundation. In this case, the resilient mounting apparatus is provided on the, and the bracket is placed on the collar.

## Claims

1. A resilient mounting apparatus (M) comprising a collar (1), a resilient body (2) and a sleeve (3) which are all integrally formed into one unit, wherein
(a) said collar (1) comprises a tubular portion (1a) and a flange portion (1b) continuously connected to said tubular portion;
(b) said resilient body (2) comprises a neck portion (2a) concentrically provided in an inner surface of said collar (1) and a pad portion (2b) extending to said flange portion (1b), said resilient body (2) being provided at its central portion with an insertion hole (3a) for a fixing means (5, 6);
(c) said sleeve (3) is integrally provided on an inner surface of said resilient body (2) such as to protrude from an upper end of said collar (1); and
(d) a lower end of said pad portion (2b) of said resilient body (2) protrudes from a lower end of said sleeve (3).

2. A resilient mounting apparatus (M) according to claim 1, wherein said collar (1), said resilient body (2) and said sleeve (3) are all integrally vulcanized into one unit.

3. A resilient mounting apparatus (M) according to claim 1 or 2, wherein inner and outer surfaces of a protrusion (2d) of said pad portion (2b) are chamfered.

4. A resilient mounting apparatus (M) according to claim 1, 2 or 3, wherein said neck portion (2a) of said resilient body is enlarged such as to cover an upper end of said tubular portion (1a) of said collar, thereby forming a spacer portion.

5. A resilient mounting apparatus (M) according to any one of claims 1 to 4, wherein a washer (104) is integrally mounted to a base surface of said pad portion (2b) of said resilient body.

6. An equipment mounting structure using a resilient mounting apparatus according to any one of claims 1 to 5, wherein an upper portion of a neck portion (2a) is abutted against a lower surface of a foundation (8) and said neck portion is held by a fixing means (5, 6) in an underslung state, and an equipment mounting bracket (9) is held on an upper surface of a flange of a collar of said resilient mounting apparatus in an underslung state.

7. A resilient mounting bush comprising a sleeve (3) disposed radially inwardly of a resilient body (2) and having an axial extent within that of said body (2) and a support collar (1) fitted to said body (2) and having an axial extent within that of said body (2), said sleeve, body and collar being integrally formed as a single unit.
